# EUROPÄISCHE PATENTSCHRIFT

(11) **EP 2 552 741 B1**
(45) Veröffentlichungstag und Bekanntmachung des Hinweises auf die Patenterteilung: **24.05.2017**
(21) Anmeldenummer: 11711532.9
(22) Anmeldetag: 28.03.2011
(51) Int. Cl.: B60N 2/08

(54) **SCHIENENLÄNGSFÜHRUNG**
LONGITUDINAL RAIL GUIDE
GUIDAGE LONGITUDINAL DE RAIL

(30) Priorität: 10.08.2010 DE 102010039157; 31.03.2010 DE 102010003568
(43) Veröffentlichungstag der Anmeldung: 06.02.2013
(73) Patentinhaber: Johnson Controls Metals and Mechanisms GmbH & Co. KG, 42699 Solingen (DE)
(72) Erfinder: SPECK, Axel, 42781 Haan-Gruiten (DE); URBAN, Daniel, 40625 Düsseldorf (DE); THIEL, Thomas, 42699 Solingen (DE)
(74) Vertreter: Bauer, Wulf
(86) Internationale Anmeldenummer: PCT/EP2011/054729
(87) Internationale Veröffentlichungsnummer: WO 2011/120920

(56) Entgegenhaltungen:
- EP-A2- 0 941 888
- DE-A1-102004 003 144
- DE-A1-102006 047 525
- DE-U1- 20 313 952

## Beschreibung

Die Erfindung bezieht sich auf eine Schienenlängsführung eines Kraftfahrzeugsitzes.

Aus der DE 10 2006 047 525 A1, die als nächstliegender Stande der Technik betrachtet wird, ist bekannt eine Schienenlängsführung eines Kraftfahrzeugsitzes mit einer Unterschiene, mit einer gegenüber der Unterschiene in einer Längsrichtung verschiebbaren Oberschiene und mit einer Arretiereinrichtung, die Arretiereinrichtung weist auf
a. ein an der Oberschiene angeordnetes Führungsteil, das mindestens eine Führungsöffnung aufweist,
b. pro Führungsöffnung ein Sperrteil, das in der Führungsöffnung verschiebbar angeordnet ist und
c. Rastöffnungen, die in der Unterschiene ausgebildet sind,
wobei in einem normalerweise vorliegenden Sperrzustand der Arretiereinrichtung mindestens ein Sperrteil in eine der Rastöffnungen eingreift und in einer betätigten Freigabeposition kein Sperrteil in eine Rastöffnung eingreift,
wobei das Führungsteil eine freie Kante aufweist, die einer benachbarten Innenfläche der Unterschiene unmittelbar gegenüberliegt und sich die freie Kante in einem Abstand von der benachbarten Innenfläche der Unterschiene befindet, wobei entweder an mindestens einem in Längsrichtung befindlichen Endbereich des Führungsteils die freie Kante in eine scharfe Ecke, übergeht oder die Arretiereinrichtung weiterhin eine Betätigungseinrichtung aufweist, und die Oberschiene ein Fenster aufweist, durch dass die Betätigungseinrichtung hindurchreicht.

Bei der aus der DE 42 42 895 C1 bekannten Schienenlängsführung ist das Führungsteil ein Teilstück eines U-förmigen Profils. Dieses ist mit seiner Basis an einer Innenfläche einer Seitenwand der Oberschiene angeordnet und hat einen unteren Steg, der quer zu dieser Seitenwand vorspringt und das Führungsteil bildet. In diesem Führungsteil sind im gezeigten Ausführungsbeispiel vier Führungsöffnungen vorgesehen. Die Arretiereinrichtung hat vier Sperrteile in Form von Sperrstiften. In bekannter Weise ist jedem Sperrstift eine einzelne Feder zugeordnet, die den Sperrstift in eine Sperrposition vorbelastet. Es ist eine Betätigungseinrichtung vorgesehen, die sich außerhalb der beiden Schienen befindet, sie hat ein gabelartiges Löseteil, das bei Betätigung alle vier Sperrzähne in die Freigabestellung zieht. Die Rastöffnungen sind in einem Bodenflansch der Unterschiene vorgesehen. Oberschiene und Unterschiene sind über Führungsmittel miteinander auf Abstand gehalten und zusammenhängend. Die Führungsmittel erlauben eine Längsverschiebung in der Längsrichtung. Die Führungsmittel sind in diagonal gegenüberliegenden Führungsbereichen angeordnet. Die Längsführung ist nicht klappsymmetrisch aufgrund dieser unterschiedlichen Anordnung der Führungsbereiche. Als Führungsmittel kommen Führungskörper, Schmierstoffe oder dergleichen in Frage.

Derartige Schienenlängsführungen haben sich grundsätzlich bewährt. Pro Sitz sind üblicherweise zwei Schienenlängsführungen vorgesehen. Die Erfindung hat sich vorgenommen, die Sicherheit der Schienenlängsführung dahingehend zu verbessern, dass einer während eines Unfalls auftretende Verschiebung der beiden Schienen gegeneinander noch besser entgegengewirkt wird als nach dem Stand der Technik.

Aufgabe der Erfindung ist es, die Schienenlängsführung der eingangs genannten Art dahingehend zu verbessern, dass sie im arretierten Zustand während eines Unfalls höhere Kräfte aufnehmen kann als die vorbekannte Schienenlängsführung, ohne dass es zusätzlicher Bauteile bedarf.

Diese Aufgabe wird gelöst durch eine Schienenlängsführung mit den Merkmalen des Anspruchs 1.

Unter einem Unfall wird dabei ein sogenannter "Crash" verstanden. Unter dem Begriff Crash wird ein Unfall verstanden, bei dem die Sicherheitseinrichtungen eines Kraftfahrzeugs, in dem sich die Schienenlängsführung befindet, auslösen, nämlich die Airbags gezündet werden.

Die Erfindung schlägt eine Wechselwirkung zwischen mindestens einer freien Kante, insbesondere einer freien Ecke des Führungsteils und einer benachbarten Innenfläche der Unterschiene während eines Unfalls vor. Die Kante bzw. Ecke wird dabei als frei bezeichnet, weil sie unmittelbar der benachbarten Innenfläche gegenübersteht. Normalerweise, vor einem Unfall, befinden sich Kante und benachbarte Innenfläche in einem geringen Abstand voneinander, der Abstand ist so groß gewählt, dass maximale Produktions- und Montageabweichungen niemals zu einem direkten Kontakt führen. Der Abstand wird so ausreichend klein gewählt, dass eine während eines Unfalls auftretende Verformung der Schienen dazu führt, dass die freie Kante in Anlage an die benachbarte Innenfläche der Unterschiene gelangt. Dadurch tritt eine Abstützung auf, es kann ein Verhaken stattfinden, die Sicherheit der Arretierung wird erhöht. In anderen Worten ausgedrückt findet ein Verkeilen statt. Die freie Ecke gräbt sich in das Material der benachbarten Innenfläche ein.

Vorteilhafterweise ist zwischen Unterschiene und Oberschiene ein Längskanal ausgebildet, der sich in Längsrichtung erstreckt. Vorteilhafterweise ist das Führungsteil in diesem Längskanal untergebracht.

Vorteilhafterweise ist der Arretiereinrichtung eine Betätigungseinrichtung zugeordnet, die teilweise im Längskanal angeordnet ist.

Besonders vorteilhaft ist eine Ausbildung, bei der das Führungsteil nur auf einer Seite des Sperrteils an der Oberschiene befestigt ist. Auf einer Seite bedeutet dabei auf einer Seite einer durch das Sperrteil gehenden Ebene, die durch die Längsrichtung und die Bewegungsrichtung des Sperrteils aufgespannt ist. Anders ausgedrückt ist das Führungsteil nur einseitig befestigt. Es ragt von seinem Befestigungsbereich frei in den Längskanal hinein. Der Befestigungsbereich des Führungsteils an der Oberschiene und die Führungsöffnung, durch die das Sperrteil hindurchgreift, sind seitlich gegeneinander versetzt. Seitlich versetzt bedeutet hierbei in y-Richtung versetzt, wobei das üblicherweise bei Kraftfahrzeugen verwendete x-y-z-Koordinatensystem Verwendung findet. Da der Ort der Befestigung des Führungsteils an der Oberschiene und die Führungsöffnung einen seitlichen Abstand voneinander haben, tritt im Unfall ein Drehmoment auf, das zu einer Verschwenkung des Führungsteils um eine Schwenkachse führt, die parallel zur Bewegungsrichtung ist.

Vorzugsweise hat diese Betätigungseinrichtung ein Fenster, das in einer Seitenwand der Oberschiene ausgebildet ist, durch dieses Fenster erstreckt sich die Betätigungseinrichtung hindurch. Durch das Fenster wird die Oberschiene lokal geschwächt, sie kann sich im Bereich des Fensters leichter verformen als an anderen Stellen ihrer Seitenwand. Das Führungsteil wird bevorzugt unterhalb des Fensters an einer Innenfläche der Seitenwand der Oberschiene angesetzt, vorzugsweise stumpf angesetzt. Dadurch macht es eine Verformung der Seitenwand in Nähe des Fensters mit und wird der Kontakt mit der benachbarten Innenfläche der Unterschiene erleichtert.

Vorteilhafterweise endet die freie Kante an mindestens einem ihrer beiden Endbereiche in einer Ecke, vorzugsweise einer scharfen Ecke. Diese kann sich bei einem Unfall in das Material der benachbarten Innenfläche eingraben. Es ist vorteilhaft, an der freien Kante und/oder an der benachbarten Innenwand Mittel vorzusehen, die es ermöglichen, dass eine bessere Verhakung zwischen freier Kante und benachbarter Innenwand der Unterschiene auftritt. Derartige Mittel umfassen z.B. Rändelungen, Riffelungen, Vielfachbohrungen, Unregelmäßigkeiten, Aufrauhung, Rippen, Noppen usw. Es ist auch möglich, zwischen der freien Kante und der benachbarten Innenwand ein Teil vorzusehen, dass bei einem Crash zerstört wird, z.B. ein Gleistreifen aus Kunststoff.

In bevorzugter Ausführung befindet die freie Kante an einer Stirnfläche des Führungsteils, die parallel zur Längsrichtung und parallel zur Bewegungsrichtung der Sperrteile verläuft.

Vorzugsweise befinden sich die Sperrteile innerhalb des Längskanals mit Ausnahme des durch die Rastöffnungen reichenden unteren Endes der Sperrteile.

Vorzugsweise befindet sich das Führungsteil so nahe den Rastöffnungen wie möglich.

Weitere Vorteile und Merkmale der Erfindung ergeben sich aus den übrigen Ansprüchen sowie der nun folgenden Beschreibung von zwei nicht einschränkend zu verstehenden Ausführungsbeispielen der Erfindung, die im Folgenden unter Bezugnahme auf die Zeichnung näher erläutert werden.

In dieser Zeichnung zeigen:
- Fig. 1:: eine perspektivische Darstellung eines kurzen Teilstücks einer Schienenlängsführung,
- Fig. 2:: eine Stirnansicht der Schienenlängsführung gemäß Figur 1.
- Fig. 3:: ein Schnitt entlang der Schnittlinie III-III in Figur 2, jedoch ohne Sperrteile, gezeigt ist der normale Zustand vor einem Unfall,
- Fig. 4:: ein Schnittbild wie Figur 3, jedoch nun nach einem Unfall,
- Fig. 5:: eine perspektivische Darstellung eines kurzen Abschnitts einer Schienenlängsführung nach einem zweiten Ausführungsbeispiel, und
- Fig. 6:: ein Schnitt entlang der Schnittebene VI-VI in Figur 5.

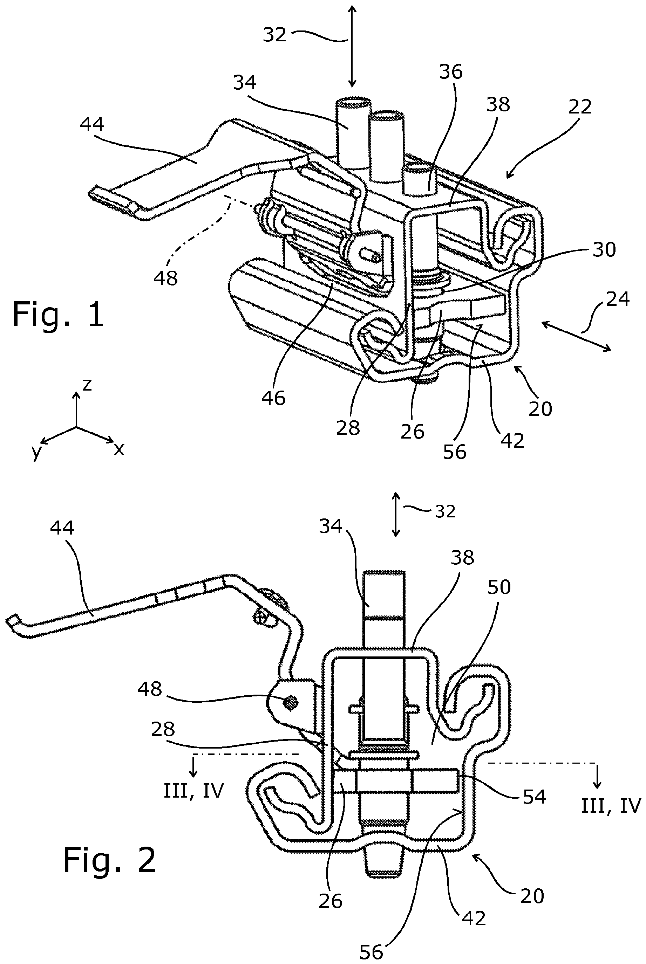

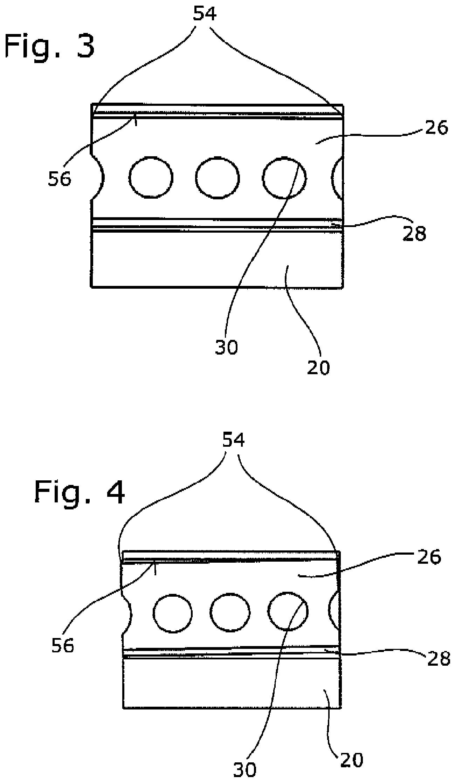

Die Schienenlängsführung nach dem ersten Ausführungsbeispiel, Figuren 1 bis 4, hat eine Unterschiene 20 und eine Oberschiene 22. Beide sind in einer Längsrichtung 24 gegeneinander verschiebbar. Die Schienenlängsführung hat eine Arretiereinrichtung. Diese hat ein Führungsteil 26, das im ersten Ausführungsbeispiel eine im Wesentlichen rechteckförmige Platte ist. Das Führungsteil 26 ist mit einer Stirnfläche stumpf gegen eine Innenfläche eines Seitenschenkels 28 der Oberschiene 22 angesetzt und befestigt, es ist insbesondere stumpf aufgeschweißt. Es ist nur an dieser Stelle befestigt, es kragt frei aus. Das Führungsteil 26 hat insgesamt drei Führungsöffnungen 30. Die Führungsöffnungen 30 im ersten Ausführungsbeispiel sind rund, sie sind zentrisch zu einer jeweiligen Öffnungsachse, die parallel zu einer Bewegungsrichtung 32 verläuft. Die Führungsöffnungen 30 sind seitlich versetzt zum Befestigungsbereich des Führungsteils 30 angeordnet, der Versatz ist in y-Richtung.

Parallel zu der eingezeichneten Bewegungsrichtung 32 können sich insgesamt drei Sperrteile 34 bewegen. Sie sind als runde Stifte ausgebildet. Jeweils ein Sperrteil 34 durchgreift eine Führungsöffnung 30. Zudem durchgreifen die Sperrteile 34 jeweils eines von drei Löchern 36, die in einem oberen Quersteg 38 der Oberschiene 22 vorgesehen sind.

Unterhalb der Führungsöffnungen 30 befinden sich Rastöffnungen 40, sie sind in einem unteren Quersteg 42 der Unterschiene 20 ausgebildet. Wie Figur 1 zeigt, durchgreift ein vorderes Sperrteil 34 eine der Rastöffnungen 40, dadurch ist ein Verschieben der Oberschiene 22 gegenüber der Unterschiene 20 verhindert, die Schienenlängsführung ist im Sperrzustand.

In Normalstellung, also unbetätigt, befindet sich die Schienenlängsführung im Sperrzustand. Um die Schienen 20, 22 gegeneinander verstellen zu können, muss bewusst eine Freigabeposition herbeigeführt werden. Dies wird durch eine Betätigungsvorrichtung erreicht. Sie hat einen Lösehebel 44, der durch ein Fenster 46 des Seitenschenkels 28 hindurch reicht. Er ist schwenkbar um eine Schwenkachse 48 gelagert.

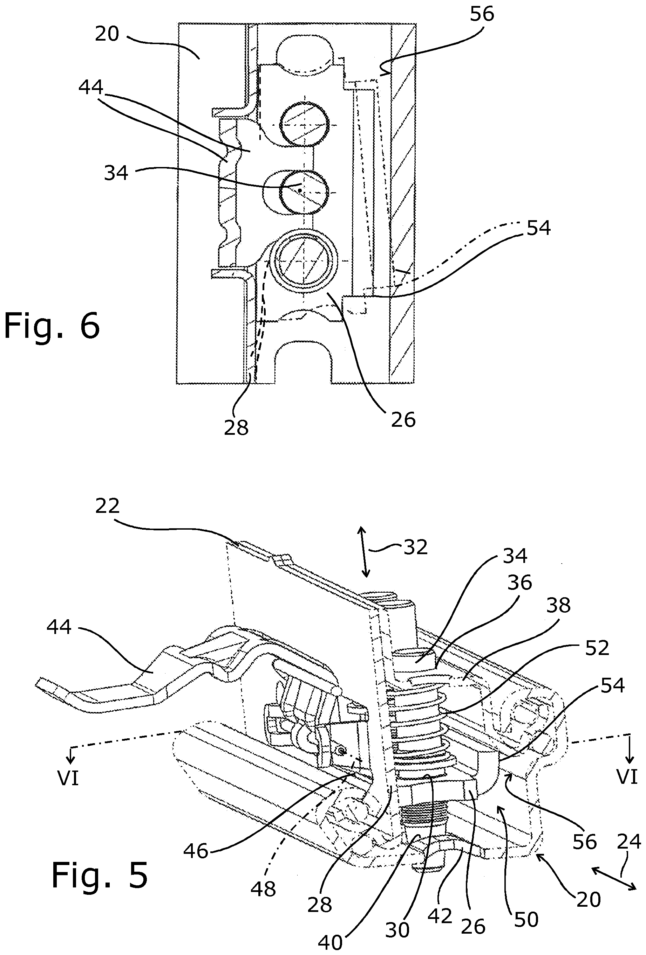

Die beiden Schienen 20, 22 begrenzen einen Innenkanal 50. Der Lösehebel 44 reicht in diesen Innenkanal 50 hinein. Dort hat er eine gabelförmige Ausbildung, siehe Fig. 6. Er untergreift jeweils einen Bund, der an jedem Sperrteil 34 vorgesehen ist. Wird der Lösehebel 44 in der Darstellung gemäß Figur 1 oder 2 in Gegenrichtung zum Uhrzeigersinn verschwenkt, werden nach und nach alle drei Sperrteile 34 in die Freigabeposition gezogen, in der sie nicht mehr mit irgendeiner Rastöffnung 40 zusammenwirken.

In bekannter Weise werden die Sperrteile 34 durch Federn 52 in ihren Sperrzustand vorbelastet. Jedes einzelne Sperrteil 34 hat eine Feder 52, siehe Figur 5.

Wie insbesondere aus den Figuren 1 und 2 ersichtlich ist, befindet sich das Führungsteil 26 in Längsrichtung auf der Höhe des Fensters 46 und ist unterhalb dieses Fensters 46 an der Innenfläche des Seitenschenkels 28 in einem Befestigungsbereich befestigt. Diesem Befestigungsbereich gegenüberliegend hat das Führungsteil 26 eine Stirnfläche, die parallel zu einer Ebene ist, die von der Längsrichtung 24 und der Bewegungsrichtung 32 aufgespannt wird. Diese Stirnfläche definiert mindestens eine freie Kante 54, im Beispiel sind es zwei freie Kanten 54. Beide sind in unmittelbarer Nähe einer benachbarten Innenfläche 56 der Unterschiene 20. Der Abstand hierzu beträgt etwa 0 bis 3mm, vorzugsweise liegt ein lichter Abstand, also ein Abstand größer Null vor, z.B. ein lichter Abstand von 0,6 mm. Die benachbarte Innenfläche 56 verläuft vorzugsweise ebenfalls parallel zu einer Ebene, die von der Längsrichtung 24 und der Bewegungsrichtung 32 aufgespannt wird.

Vor einem Unfall berühren sich Stirnfläche bzw. die freien Kanten 54 und die benachbarte Innenfläche 56 nicht. Sie sind in einem Abstand voneinander, der ein ordnungsgemäßes Funktionieren der Schienenlängsführung sichert.

Wird die Schienenlängsführung durch einen Unfall belastet, beispielsweise durch einen Frontaufprall des Fahrzeugs oder einen Heckaufprall, werden unfallbedingt die beiden Schienen 20, 22 gegeneinander bewegt. Es kommt zu einer Verformung der Sperrteile 34, die gerade im Eingriff sind. Während des Unfalls tritt ein Drehmoment am Führungsteil 26 auf. Da es nur einseitig festgelegt ist und über das mindestens eine im Sperrzustand befindliche Sperrteil 34 eine Kraft, die im Wesentlichen in der Längsrichtung wirkt, in das Führungsteil 26 eingeleitet wird, hat dieses die Tendenz, sich zu drehen bzw. quer zu stellen. Es bewegt sich dabei in einer Ebene, die parallel ist zum oberen Quersteg 38 und zum unteren Quersteg 42 liegt. Es dreht sich um eine Achse, die parallel zur Bewegungsrichtung 32 ist. Es kommt dadurch auch zu einer Verformung des Seitenschenkels 28 in Nähe des Fensters 46, wo der Seitenflansch 28 ohnehin lokal geschwächt ist. Dies alles führt dazu, dass mindestens eine freie Kante 54 in Kontakt mit der benachbarten Innenfläche 56 kommt. Er führt zumindest zu einer erhöhten Reibung.

Wie insbesondere Figur 1 zeigt, hat der vordere Endbereich der freien Kante 54 die Form einer Ecke, bevorzugt einer scharfen Ecke. Der hintere Endbereich ist genauso ausgebildet. Mit einer derartigen scharfen Ecke kann sich das Führungsteil 26 in die benachbarte Innenfläche 56 eingraben. Bei einem Unfall kommt eine Ecke in ersten Kontakt mit der benachbarten Innenfläche.

Vorteilhafterweise, in den Figuren jedoch nicht dargestellt, sind die freien Kanten 54 und/oder ist die benachbarte Innenfläche 56 unregelmäßig ausgebildet, um eine gute Verhakung und eine Wechselwirkung zwischen einer freien Kante 54 und der benachbarten Innenfläche 56 zu fördern.

Das zweite Ausführungsbeispiel nach den Figuren 5 und 6 wird im Folgenden insoweit beschrieben, als es sich vom ersten Ausführungsbeispiel unterscheidet. Gemeinsamkeiten werden nicht erwähnt.

Die Oberschiene 22 ist nun aus zwei Einzelprofilen zusammengesetzt. Die Führungsbereiche nehmen nun jeweils zwei Reihen von Führungskörpern auf, diese sind wiederum als Kugeln ausgebildet. Das Führungsteil 26 hat nun nicht die Form einer Platte, sondern ist an seinem freien Ende L-förmig hochgebogen. Dadurch steht eine freie Kante 54 der benachbarten Innenfläche 56 gegenüber. Sie kann sich, wie Figur 6 zeigt, in diese eingraben. In Fig. 6 ist das durch einen Unfall verdrehte Führungsteil 54 strichpunktiert eingezeichnet, die Verformung des Seitenschenkels 28 ist jedoch nicht dargestellt.

Mehrere Formen der kinematischen Umkehr sind möglich. So können die Rastöffnungen auch in der Oberschiene vorgesehen sein, dann ist das Führungsteil an der Unterschiene angeordnet. In einer anderen kinematischen Umkehr ist die freie Kante 54 nicht am Führungsteil 26, sondern an der benachbarten Innenfläche 56 der Unterschiene 20 vorgesehen. Das Führungsteil 26 hat dann eine Fläche, mit der diese freie Kante wechselwirken kann.

Die konstruktive Auslegung der Teile der Schienenlängsführung, insbesondere aller betroffenen Bauteile, die im Kraftfluss liegen, erfolgt so, dass bei einem Unfall, der gerade die Crash-Schwelle erreicht oder nur geringfügig darüber liegt, die Abstützung der freien Kante an der benachbarten Innenfläche bereits erfolgt.

Der Abstand zwischen der freien Kante 54 und der benachbarten Innenfläche 56 wird so ausreichend ausgewählt, dass sich in einem normalen Fahrzustand und insbesondere auch bei Unfällen, die unterhalb eines Crashs liegen, freie Kante 54 und Innenfläche 26 nicht berühren. Der Abstand zwischen beiden wird so ausreichend klein gewählt, dass sich bei einem Crash tatsächlich die freie Kante 54 ausreichend der benachbarten Innenfläche 56 nähert und mit dieser in Kontakt kommt, so dass die erfindungsgemäße Abstützung stattfinden kann. Dies bedarf einer Abstimmung aller betroffenen Bauteile, die im Kraftfluss liegen. Die Arretiervorrichtung darf nicht zu steif, aber auch nicht zu weich ausgebildet sein. Gleiches gilt für die sonstigen Bauteile, insbesondere die Schienen.

Vorzugsweise befindet sich die freie Kante 54 vor einem Unfall in einem Abstand ≤ 2mm von der benachbarten Innenfläche 56 der Unterschiene 20.

Der Anmelder behält sich vor, beliebige Merkmale und Untermerkmale aus den Patentansprüchen und/oder beliebige Merkmale und Untermerkmale aus Sätzen der Beschreibung in beliebiger Form miteinander zu kombinieren, auch wenn eine derartige Kombination nicht konkret beansprucht oder angesprochen ist.

## Patentansprüche

1. Schienenlängsführung eines Kraftfahrzeugsitzes mit einer Unterschiene (20), mit einer gegenüber der Unterschiene (20) in einer Längsrichtung (24) verschiebbaren Oberschiene (22) und mit einer Arretiereinrichtung, wobei die Arretiereinrichtung aufweist:
a. ein an der Oberschiene (22) angeordnetes Führungsteil (26), das mindestens eine Führungsöffnung (30) aufweist,
b. pro Führungsöffnung (30) ein Sperrteil (34), das in der Führungsöffnung (30) verschiebbar angeordnet ist und
c. Rastöffnungen (40), die in der Unterschiene (20) ausgebildet sind,
wobei in einem normalerweise vorliegenden Sperrzustand der Arretiereinrichtung mindestens ein Sperrteil (34) in eine der Rastöffnungen (40) eingreift und in einer betätigten Freigabeposition kein Sperrteil (34) in eine Rastöffnung (40) eingreift,
wobei das Führungsteil (26) eine freie Kante (54) aufweist, die einer benachbarten Innenfläche (56) der Unterschiene (20) unmittelbar gegenüberliegt und sich die freie Kante (54) in einem Abstand von der benachbarten Innenfläche (56) der Unterschiene (20) befindet, und **dadurch gekennzeichnet, dass** die freie Kante nach einem Unfall, der dergestalt ist, dass in einem Kraftfahrzeug, in dem sich die Schienenlängsführung befinden kann, vorhandene Airbags gezündet werden, in Anlage an der benachbarten Innenfläche (56) ist, und dass
- entweder an mindestens einem in Längsrichtung (24) befindlichen Endbereich des Führungsteils (26) die freie Kante (54) in eine scharfe Ecke übergeht
- oder die folgenden Merkmale erfüllt sind: die Arretiereinrichtung weist weiterhin eine Betätigungseinrichtung auf, und die Oberschiene (22) weist ein Fenster (46) auf, durch dass die Betätigungseinrichtung hindurchreicht.

2. Schienenlängsführung nach Anspruch 1, **dadurch gekennzeichnet, dass** zwischen Unterschiene (20) und Oberschiene (22) ein Längskanal (50) ausgebildet ist, der in Längsrichtung (24) verläuft, dass im Längskanal (50) eine Innenfläche der Oberschiene (22) der benachbarten Innenfläche (56) in einer Ebene gegenüberliegt, die sich quer zur Längsrichtung (24) und quer zu einer Bewegungsrichtung (32) des mindestens einen Sperrteils (34) erstreckt, und dass das Führungsteil (26) an der Innenfläche der Oberschiene (22) befestigt ist.

3. Schienenlängsführung nach einem der vorangegangenen Ansprüche, **dadurch gekennzeichnet, dass** die freie Kante (54) sich an einer Stirnfläche des Sperrteils (34) befindet, und dass sich die Stirnfläche parallel zur Längsrichtung (24) und/oder parallel zu einer Bewegungsrichtung (32) des mindestens einen Sperrteils (34) erstreckt.

4. Schienenlängsführung nach einem der vorangegangenen Ansprüche, **dadurch gekennzeichnet, dass** die scharfe Ecke eine 90° verlaufende Ecke ist.

5. Schienenlängsführung nach einem der vorangegangenen Ansprüche, **dadurch gekennzeichnet, dass** das Führungsteil (26) unterhalb des Fensters (46) an einer Innenfläche der Oberschiene (22) befestigt ist.

6. Schienenlängsführung nach einem der vorangegangenen Ansprüche, **dadurch gekennzeichnet, dass** an der freien Kante und/oder an der benachbarten Innenfläche (56) der Unterschiene (20) Mittel vorgesehen sind, die eine Wechselwirkung von freier Kante (54) benachbarter Innenfläche (56) verbessern, wobei unter solchen Mittel zum Beispiel eine Aufrauung, Vielfachlochung, Rippen, Noppen und andere Abweichungen von einem glatten Verlauf der Kante und/oder der benachbarten Innenfläche (56) der Unterschiene (20) verstanden wird.

7. Schienenlängsführung nach einem der vorangegangenen Ansprüche, **dadurch gekennzeichnet, dass** der Abstand zwischen der freien Kante und der benachbarten Innenfläche (56) der Unterschiene (20) zwischen 0,8 und 0,4 mm, insbesondere bei etwa 0,6 mm liegt.

8. Schienenlängsführung nach einem der vorangegangenen Ansprüche, **dadurch gekennzeichnet, dass** die freie Kante (54) während eines Unfalls sich in einer Ebene bewegt, die sich quer zur Längsrichtung (24) und quer zu einer Bewegungsrichtung (32) des mindestens einen Sperrteils (34) erstreckt.

9. Schienenlängsführung nach einem der vorangegangenen Ansprüche, **dadurch gekennzeichnet, dass** die Oberschiene (22) eine oberen Flansch aufweist, und dass das Führungsteil (26) näher zu den Rastöffnungen (40) als zu dem oberen Flansch angeordnet ist.

10. Schienenlängsführung nach einem der vorangegangenen Ansprüche, **dadurch gekennzeichnet, dass** zwischen Unterschiene (20) und Oberschiene (22) ein Längskanal (50) ausgebildet ist, der in Längsrichtung (24) verläuft, und dass das Führungsteil (26) in dem Längskanal (50) untergebracht ist.

11. Schienenlängsführung nach einem der vorangegangenen Ansprüche, **dadurch gekennzeichnet, dass** die Oberschiene (22) eine oberen Flansch aufweist, und dass das Führungsteil (26) parallel zu dem oberen Flansch verläuft.

12. Schienenlängsführung nach einem der vorangegangenen Ansprüche, **dadurch gekennzeichnet, dass** die Oberschiene (22) eine Seitenflansch (28) aufweist, dass die Seitenwand parallel zur Längsrichtung (24) und parallel zu einer Bewegungsrichtung (32) des mindestens einen Sperrteils (34) verläuft, und dass das Führungsteil (26) nur an dem Seitenflansch (28) befestigt ist.

13. Schienenlängsführung nach dem vorangegangenen Anspruch, **dadurch gekennzeichnet, dass** der Bereich des Seitenflanschs (28), an dem das Führungsteit (26) befestigt ist, möglichst weit entfernt ist von entweder einer Abbiegung der Seitenwand um eine Biegelinie parallel zur Längsrichtung (24) und/oder der mindestens einen Führungsöffnung (30).

14. Schienenlängsführung nach einem der vorangegangenen Ansprüche, **dadurch gekennzeichnet, dass** zwischen einem einzigen Befestigungsbereich, an dem das Führungsteil (26) mit der Oberschiene (22) verbunden ist, und der mindestens einen Führungsöffnung (36) ein seitlicher Abstand besteht, der vorzugsweise größer als 5 mm, insbesondere größer als 10 mm ist.

## Claims

1. A longitudinal rail guide of a motor vehicle seat comprising a bottom rail (20), a top rail (22) that is displaceable relative to the bottom rail (20) in a longitudinal direction (24), and a locking device, the locking device comprising:
a. a guide part (26) which is disposed on the top rail (22) and has at least one guide opening (30),
b. for each guide opening (30) one blocking part (34) that is displaceably disposed in the guide opening (30), and
c. latching openings (40) formed in the bottom rail (20), wherein, in a normally provided blocking state of the locking device, at least one blocking part (34) latches into one of the latching openings (40), and in an actuated release position, no blocking part (34) latches into a latching opening (40),
wherein the guide part (26) has a free edge (54) which is immediately opposite to an adjacent inner face (56) of the bottom rail (20), and the free edge (54) is located at a distance from the adjacent inner face (56) of the bottom rail (20), and **characterized in that**, subsequent to an accident of the kind in which airbags provided in a motor vehicle in which the longitudinal rail guide may be located, the free edge rests against the adjacent inner face (56), and that
- either the free edge (54) transitions into a sharp corner at at least one end portion of the guide part (26) located in the longitudinal direction (24),
- or the following features are satisfied: the locking device further comprises an actuating device, and the top rail (22) comprises a window (46) through which the actuating device extends.

2. The longitudinal rail guide according to claim 1, **characterized in that** a longitudinal channel (50) extending in the longitudinal direction (24) is formed between the bottom rail (20) and the top rail (22), that in the longitudinal channel (50) an inner face of the top rail (22) lies opposite to the adjacent inner face (56) in a plane which extends transversely to the longitudinal direction (24) and transversely to a direction of movement (32) of the at least one blocking part (34), and that the guide part (26) is attached to the inner face of the top rail (22).

3. The longitudinal rail guide according to any one of the preceding claims, **characterized in that** the free edge (54) is located at an end face of the blocking part (34) and that the end face extends parallel to the longitudinal direction (24) and/or parallel to a direction of movement (32) of the at least one blocking part (34).

4. The longitudinal rail guide according to any one of the preceding claims, **characterized in that** the free edge (54) is a 90° corner.

5. The longitudinal rail guide according to claim 5, **characterized in that** the guide part (26) is attached below the window (46) to an inner face of the top rail (22).

6. The longitudinal rail guide according to any one of the preceding claims, **characterized in that** means which improve an interaction of the free edge (54) and the adjacent inner face (56) are provided on the free edge and/or the adjacent inner face (56) of the bottom rail (20), the means being understood to be, for example, a roughened portion, multiple holes, ribs, studs and other deviations from a smooth profile of the edge and/or the adjacent inner face (56) of the bottom rail (20).

7. The longitudinal rail guide according to any one of the preceding claims, **characterized in that** the distance between the free edge and the adjacent inner face (56) of the bottom rail (20) is between 0.8 and 0.4 mm, in particular about 0.6 mm.

8. The longitudinal rail guide according to any one of the preceding claims, **characterized in that** the free edge (54), during the course of an accident, moves in a plane that extends transversely to the longitudinal direction (24) and transversely to a direction of movement (32) of the at least one blocking part (34).

9. The longitudinal rail guide according to any one of the preceding claims, **characterized in that** the top rail (22) comprises an upper flange, and that the guide part (26) is disposed closer to the latching openings (40) than to the upper flange.

10. The longitudinal rail guide according to any one of the preceding claims, **characterized in that** a longitudinal channel (50) extending in the longitudinal direction (24) is formed between the bottom rail (20) and the top rail (22), and that the guide part (26) is accommodated in the longitudinal channel (50).

11. The longitudinal rail guide according to any one of the preceding claims, **characterized in that** the top rail (22) comprises an upper flange, and that the guide part (26) extends parallel to the upper flange.

12. The longitudinal rail guide according to any one of the preceding claims, **characterized in that** the top rail (22) comprises a lateral flange (28), that the side wall extends parallel to the longitudinal direction (24) and/or parallel to a direction of movement (32) of the at least one blocking part (34), and that the guide part (26) is attached only to the lateral flange (28).

13. The longitudinal rail guide according to the preceding claim, **characterized in that** the area of the lateral flange (28) to which the guide part (26) is attached is as distant as possible from either a bend of the side wall about a bending line parallel to the longitudinal direction (24), and/or from the at least one guide opening (30).

14. The longitudinal rail guide according to any one of the preceding claims, **characterized in that** there is a lateral distance, which is preferably greater than 5 mm, in particular greater than 10 mm, between a single area of attachment at which the guide part (26) is connected to the top rail (22), and the at least guide opening (36).

## Revendications

1. Guidage longitudinal de rail d'un siège de véhicule automobile comprenant un rail inférieur (20), un rail supérieur (22) déplaçable par rapport au rail inférieur (20) dans une direction longitudinale (24) ainsi qu'un dispositif d'arrêt, dans lequel ledit dispositif d'arrêt comprend:
a. une partie de guidage (26) qui est disposée sur le rail supérieur (22) et qui présente au moins une ouverture de guidage (30),
b. une partie de blocage (34) par ouverture de guidage (30), qui est disposée à coulissement dans ladite ouverture de guidage (30), et
c. des ouvertures d'encliquetage (40) qui sont ménagées dans le rail inférieur (20),
dans lequel, dans un état de blocage normalement présent du dispositif d'arrêt, une partie de blocage (34) au moins s'engage dans l'une des ouvertures d'encliquetage (40), et, dans une position de libération actionnée, aucune partie de blocage (34) ne s'engage dans une ouverture d'encliquetage (40),
dans lequel ladite partie de guidage (26) comprend une arête libre (54) qui est située directement en regard d'une surface intérieure voisine (56) du rail inférieur (20), et l'arête libre (54) se situe à une distance de la surface intérieure voisine (56) du rail inférieur (20), et
**caractérisé par le fait que**, après un accident qui est tel que des airbags présents dans un véhicule automobile dans lequel le guidage longitudinal de rail peut se trouver sont déclenchés, l'arête libre est en appui contre la surface intérieure voisine (56), et que,
- soit, sur au moins une zone d'extrémité de la partie de guidage (26), qui est située dans la direction longitudinale (24), l'arête libre (54) se prolonge en formant un coin vif,
- soit les caractéristiques suivantes sont satisfaites: le dispositif d'arrêt présente en outre un dispositif de manoeuvre et le rail supérieur (22) présente une fenêtre (46) à travers laquelle s'étend le dispositif de manoeuvre.

2. Guidage longitudinal de rail selon la revendication 1, **caractérisé par le fait qu'**un canal longitudinal (50) est réalisé entre le rail inférieur (20) et le rail supérieur (22), qui s étend dans la direction longitudinale (24), que, dans ledit canal longitudinal (50), une surface intérieure du rail supérieur (22) est située en regard de la surface intérieure voisine (56) dans un plan qui s'étend transversalement à la direction longitudinale (24) et transversalement à une direction de mouvement (32) de ladite au moins une partie de blocage (34), et que la partie de guidage (26) est fixée sur la surface intérieure du rail supérieur (22).

3. Guidage longitudinal de rail selon l'une quelconque des revendications précédentes, **caractérisé par le fait que** l'arête libre (54) se trouve sur une surface frontale de la partie de blocage (34) et que la surface frontale s'étend parallèlement à la direction longitudinale (24) et/ou parallèlement à une direction de mouvement (32) de ladite au moins une partie de blocage (34).

4. Guidage longitudinal de rail selon l'une quelconque des revendications précédentes, **caractérisé par le fait que** ledit coin vif est un coin s'étendant à 90°.

5. Guidage longitudinal de rail selon l'une quelconque des revendications précédentes, **caractérisé par le fait que** la partie de guidage (26) est fixée au-dessous de la fenêtre (46) sur une surface intérieure du rail supérieur (22).

6. Guidage longitudinal de rail selon l'une quelconque des revendications précédentes, **caractérisé par le fait que** sur ladite arête libre et/ou sur la surface intérieure voisine (56) du rail inférieur (20) sont prévus des moyens qui améliorent une interaction de l'arête libre (54) et de la surface intérieure voisine (56), dans lequel on entend par de tels moyens par exemple une structure rugueuse, une perforation multiple, des nervures, des projections et d'autres écarts par rapport à une allure lisse de l'arête et/ou de la surface intérieure voisine (56) du rail inférieur (20).

7. Guidage longitudinal de rail selon l'une quelconque des revendications précédentes, **caractérisé par le fait que** la distance séparant l'arête libre et la surface intérieure voisine (56) du rail inférieur (20) est comprise entre 0,8 et 0,4 mm, en particulier est de 0,6 mm à peu près.

8. Guidage longitudinal de rail selon l'une quelconque des revendications précédentes, **caractérisé par le fait que**, durant un accident, l'arête libre (54) se déplace dans un plan qui s'étend transversalement à la direction longitudinale (24) et transversalement à une direction de mouvement (32) de ladite au moins une partie de blocage (34).

9. Guidage longitudinal de rail selon l'une quelconque des revendications précédentes, **caractérisé par le fait que** le rail supérieur (22) présente un flasque supérieur et que la partie de guidage (26) est disposée de manière à être plus près des ouvertures d'encliquetage (40) que dudit flasque supérieur.

10. Guidage longitudinal de rail selon l'une quelconque des revendications précédentes, **caractérisé par le fait qu'**un canal longitudinal (50) est réalisé entre le rail inférieur (20) et le rail supérieur (22), qui s'étend dans la direction longitudinale (24) et que la partie de guidage (26) est logée à l'intérieur du canal longitudinal (50).

11. Guidage longitudinal de rail selon l'une quelconque des revendications précédentes, **caractérisé par le fait que** le rail supérieur (22) présente un flasque supérieur et que la partie de guidage (26) s'étend parallèlement au flasque supérieur.

12. Guidage longitudinal de rail selon l'une quelconque des revendications précédentes, **caractérisé par le fait que** le rail supérieur (22) présente un flasque latéral (28), que la paroi latérale s'étend parallèlement à la direction longitudinale (24) et parallèlement à une direction de mouvement (32) de ladite au moins une partie de blocage (34) et que la partie de guidage (26) n'est fixée que sur le flasque latéral (28).

13. Guidage longitudinal de rail selon la revendication précédente, **caractérisé par le fait que** la zone du flasque latéral (28) où la partie de guidage (26) est fixée est située à une distance aussi grande que possible soit d'une coude de la paroi latérale autour d'une ligne de pliage parallèle à la direction longitudinale (24) et/soit de ladite au moins une ouverture de guidage (30).

14. Guidage longitudinal de rail selon l'une quelconque des revendications précédentes, **caractérisé par le fait qu'**une distance latérale existe entre une seule zone de fixation sur laquelle la partie de guidage (26) est reliée au rail supérieur (22) et ladite au moins une ouverture de guidage (30), qui, de préférence, est supérieure à 5 mm, en particulier supérieure à 10 mm.
